# EUROPEAN PATENT APPLICATION

(11) **EP 4 387 069 A1**
(43) Date of publication of application: **19.06.2024**
(21) Application number: 22213675.6
(22) Date of filing: 15.12.2022
(51) Int. Cl.: H02M 3/00, H02M 3/335, H02M 1/00, H05B 45/39

(54) **RESONANT HYBRID FLYBACK CONVERTER FOR A LED-BASED LOAD**

(71) Applicant: Tridonic GmbH & Co KG, 6851 Dornbirn (AT)
(72) Inventor: Schneider, Miguel Philipp, 6850 Dornbirn (AT); Walch, Patrick, 6850 Dornbirn (AT); Maldoner, Jakob, 6850 Dornbirn (AT)
(74) Representative: Rupp, Christian

(57) **Abstract**

A resonant hybrid flyback converter (10) for a LED-based load (13c) is provided. Said resonant hybrid flyback converter (10) comprises a half-bridge (11) comprising a high-side switch (11a) and a low-side switch (11b), a flyback resonant tank (12) comprising a transformer with a primary side (15a) and a secondary side (15b), and a processing unit (14). In this context, the half-bridge (11) is configured to supply said primary side (15a), wherein the secondary side (15b) is configured to supply the LED-based load (13c). Additionally, the processing unit (14) is configured to sense a LED current with respect to the LED-based load (13c). In further addition to this, the processing unit (14) is configured to control an on-time of the low-side switch (11b) and/or an on-time of the high-side switch (11a) on the basis of the LED current.

## Description

The invention relates to a resonant hybrid flyback converter for a LED-based load. In this context, it is noted that "hybrid flyback" can especially be understood as "half-bridge circuit supplying a flyback resonant tank".

Generally, in times of an increasing use of LED lighting means in many different areas of life, there is a growing need of a resonant hybrid flyback converter for a LED-based load, a system comprising such a resonant hybrid flyback converter and a LED-based load, and a method for operating a resonant hybrid flyback converter for a LED-based load in order to ensure an efficient and reliable supply of said LED-based load especially in the sense of a save operation, a minimum resonant current, and a big output operation window.

However, there are no resonant hybrid flyback converters allowing for such improvements especially in the sense of a save operation, a minimum resonant current, and a big output operation window.

Accordingly, there is the object to provide a resonant hybrid flyback converter for a LED-based load, a system comprising such a resonant hybrid flyback converter and a LED-based load, and a method for operating a resonant hybrid flyback converter for a LED-based load, thereby ensuring a high efficiency and reliability especially in the sense of a save operation, a minimum resonant current, and a big output operation window.

This object is solved by the features of the first independent claim for a resonant hybrid flyback converter for a LED-based load, the features of the second independent claim for a system comprising such a resonant hybrid flyback converter and a LED-based load, and the features of the third independent claim for a method for operating a resonant hybrid flyback converter for a LED-based load. The dependent claims contain further developments.

According to a first aspect of the invention, a resonant hybrid flyback converter for a LED-based load is provided. Said resonant hybrid flyback converter comprises a half-bridge comprising a high-side switch and a low-side switch, a flyback resonant tank comprising a transformer with a primary side and a secondary side, and a processing unit. In this context, the half-bridge is configured to supply said primary side, wherein the secondary side is configured to supply the LED-based load. Additionally, the processing unit is configured to sense a LED current with respect to the LED-based load. In further addition to this, the processing unit is configured to control an on-time of the low-side switch and/or an on-time of the high-side switch on the basis of the LED current. Advantageously, this allows for ensuring a high efficiency and reliability especially in the sense of a save operation, a minimum resonant current, and a big output operation window.

According to a first preferred implementation form of the first aspect of the invention, the processing unit is configured to adjust an operating point with respect to controlling the on-time of the high-side switch on the basis of controlling the on-time of the low-side switch. In addition to this or as an alternative, the resonant hybrid flyback converter is operated as a current-regulated resonant hybrid flyback converter and/or as a constant current source. Advantageously, for instance, not only efficiency but also reliability can further be increased. Further advantageously, the corresponding output operation window can be widened for allowing dimming to 1 per cent and a wide LED voltage range.

According to a second preferred implementation form of the first aspect of the invention, the processing unit is configured to control the on-time of the low-side switch such that there is essentially a zero current switching of the low-side switch. Advantageously, for example, this allows for a particular save operation of the half-bridge. Further advantageously, the resonant tank can be run in a way that the corresponding contacting half wave has such an on-time that the switch stops conducting when the respective current reaches zero.

With respect to the above-mentioned term "essentially", it is noted that said term can especially be understood as a corresponding deviation of not more than 10 per cent, preferably not more than 5 per cent, more preferably not more than 3 per cent, most preferably not more than 1 per cent.

According to a further preferred implementation form of the first aspect of the invention, the processing unit is configured to control the on-time of the low-side switch such that the on-time of the low-side switch does not exceed a maximum limit being especially settable. Advantageously, for instance, inefficiencies can further be reduced.

According to a further preferred implementation form of the first aspect of the invention, the processing unit is configured to control the on-time of the low-side switch such that the on-time of the low-side switch does not undercut a minimum limit being especially settable. Advantageously, for example, efficiency can further be increased.

According to a further preferred implementation form of the first aspect of the invention, the processing unit is configured to limit a step size with respect to controlling the on-time of the low-side switch. Advantageously, for instance, this allows for preventing a visible effect on the LED-based load or light source, respectively.

According to a further preferred implementation form of the first aspect of the invention, the processing unit is configured to control the on-time of the low-side switch and/or the on-time of the high-side switch such that a respective conducting current on the secondary side is kept near resonance. Advantageously, for example, efficiency can further be increased.

With respect to the above-mentioned term "near", it is noted that said term can especially be understood as a corresponding deviation of not more than 10 per cent, preferably not more than 5 per cent, more preferably not more than 3 per cent, most preferably not more than 1 per cent.

According to a further preferred implementation form of the first aspect of the invention, the resonant hybrid flyback converter or the processing unit comprises a controlling element, preferably a proportional integral controlling element, wherein controlling the on-time of the high-side switch is based on a controlled variable received from the controlling element, preferably the proportional integral controlling element. Advantageously, for instance, a high accuracy and quickness of the corresponding control can be ensured, thereby increasing both efficiency and reliability.

According to a further preferred implementation form of the first aspect of the invention, the controlling element, preferably the proportional integral controlling element, is configured to form the controlled variable on the basis of the LED current and a target LED current being especially settable. Advantageously, for example, the target LED current can be set by a user especially during operation and/or in advance.

According to a further preferred implementation form of the first aspect of the invention, the processing unit is configured to sense a half-bridge current with respect to the primary side. Additionally or alternatively, the processing unit is configured to control the on-time of the high-side switch on the basis of a peak detection with respect to the controlled variable and/or the half-bridge current. Advantageously, for instance, a peak control of the corresponding peak current can be implemented in an efficient manner. Further advantageously, when the respective peak is reached, the high-side switch can reliably be turned off.

According to a further preferred implementation form of the first aspect of the invention, the processing unit is configured to sense the on-time of the high-side switch. Additionally or alternatively, the processing unit is configured to control the on-time of the low-side switch on the basis of the on-time of the high-side switch. Advantageously, for example, reliability can further be increased, thereby also reducing inefficiencies.

According to a further preferred implementation form of the first aspect of the invention, the resonant hybrid flyback converter or the processing unit comprises a current transformer for sensing the LED current. Advantageously, for instance, complexity can be reduced, thereby increasing not only efficiency but also reliability.

According to a second aspect of the invention, a system is provided. Said system comprises a resonant hybrid flyback converter according to the first aspect of the invention or any of the preferred implementation form thereof, respectively, and a LED-based load being supplied by said resonant hybrid flyback converter. Advantageously, this allows for ensuring a high efficiency and reliability especially in the sense of a save operation, a minimum resonant current, and a big output operation window.

According to a third aspect of the invention, a method for operating a resonant hybrid flyback converter for a LED-based load is provided. Said method comprises the steps of sensing a LED current with respect to the LED-based load, and controlling an on-time of a low-side switch of a half-bridge of the resonant hybrid flyback converter and/or an on-time of a high-side switch of said half-bridge on the basis of the LED current. Advantageously, this allows for ensuring a high efficiency and reliability especially in the sense of a save operation, a minimum resonant current, and a big output operation window.

According to a first preferred implementation form of the third aspect of the invention, the method further comprises the step of adjusting an operating point with respect to controlling the on-time of the high-side switch on the basis of controlling the on-time of the low-side switch, and/or operating the resonant hybrid flyback converter as a current-regulated resonant hybrid flyback converter and/or as a constant current source. Advantageously, for instance, not only efficiency but also reliability can further be increased.

It is noted that all the explanations or further implementation forms according to the first aspect of the invention analogously apply for the third aspect of the invention.

Exemplary embodiments of the invention are now further explained with respect to the drawings by way of example only, and not for limitation. In the drawings:
- Fig. 1: shows an exemplary embodiment of the first aspect of the invention in combination with the second aspect of the invention;
- Fig. 2: shows an abstract illustration of the first and the second aspect of the invention especially for explaining corresponding functioning in greater detail;
- Fig. 3: shows an exemplary circuit diagram for further illumination of Fig. 1 or Fig. 2, respectively; and
- Fig. 4: shows a flow chart of an embodiment of the third aspect of the invention.

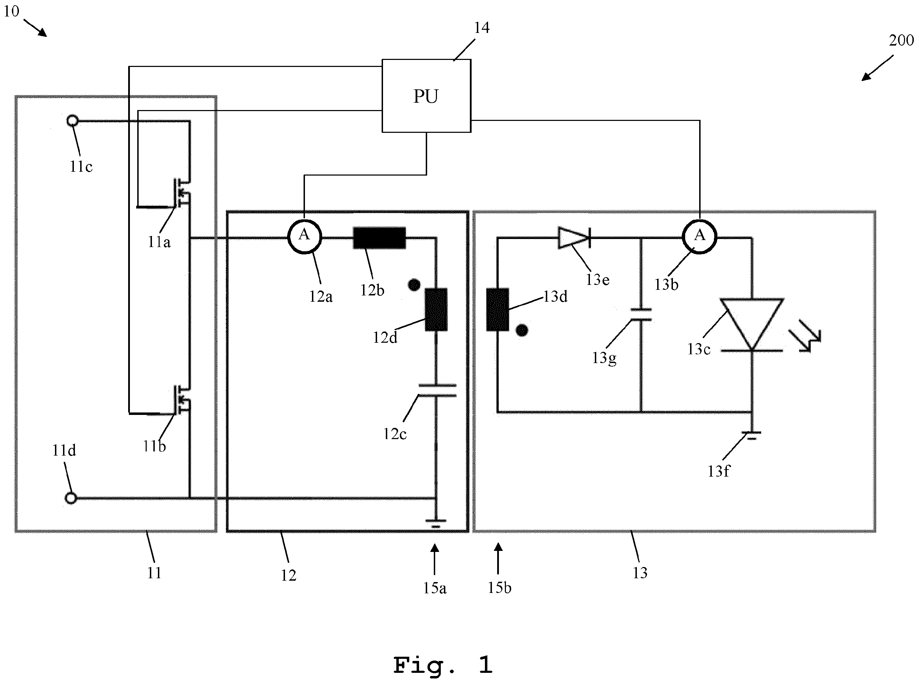

With respect to Fig. 1, an exemplary embodiment of the inventive resonant hybrid flyback converter 10 for a LED-based load, exemplarily a LED (light-emitting diode) 13c, is depicted.

For the sake of completeness, it is noted that said Fig. 1 additionally illustrates an exemplary embodiment of the inventive system 200 comprising said resonant hybrid flyback converter 10 and said LED-based load, exemplarily said LED 13c, being supplied by the resonant hybrid flyback converter 10.

In accordance with Fig. 1, the resonant hybrid flyback converter 10 comprises a half-bridge 11 comprising a high-side switch, exemplarily a first field-effect transistor 11a, and a low-side switch, exemplarily a second field-effect transistor 11b.

With respect to said field-effect transistors 11a and 11b, it is noted that said transistors are exemplarily of an n-channel enhancement type.

Furthermore, the resonant hybrid flyback converter 10 comprises a flyback resonant tank 12 comprising a transformer with a primary side 15a and a secondary side 15b. It is noted that the half-bridge 11 is configured to supply said primary side 15a, wherein the secondary side 15b is configured to supply the LED-based load, exemplarily the LED 13c.

Moreover, the above-mentioned primary side 15a comprises a series connection of a leakage inductance 12b, which can be optional or omitted, respectively, a corresponding transformer main inductance 12d and a capacitance 12c, exemplarily a resonance capacitor. In this context, it is noted that a half-bridge current as referred to in the following especially flows through said series connection.

As it can further be seen from Fig. 1, the resonant hybrid flyback converter 10 further comprises supplying means 13 being configured to be supplied by the secondary side 15b and to supply the LED-based load or the LED 13c, respectively.

In this context, the supplying means 13 comprise a switch and/or a diode, exemplarily a diode 13e, and a capacitance, exemplarily an output capacitor 13g.

Furthermore, the capacitance 13g is exemplarily connected in parallel to the LED 13c, whereas the diode 13e is exemplarily connected in series to said parallel connection of the LED 13c and the capacitance 13g.

In particular, a first terminal of a transformer secondary inductance 13d is connected to a first terminal, exemplarily an anode terminal, of the diode 13e, whereas a second terminal, exemplarily a cathode terminal, of said diode 13e is connected to a first terminal of the capacitance 13g and to a first terminal of the LED 13c.

In addition this, a second terminal of the transformer secondary inductance 13d is connected to a second terminal of the capacitance 13g and to a second terminal of the LED 13c. Said second terminal of the LED 13c is exemplarily connected to a first voltage potential, preferably ground, more preferably ground 13f of the secondary side 15b.

Again, with respect to the half-bridge 11, it is noted that a first terminal, exemplarily a drain terminal, of the first field-effect transistor 11a is connected to a second voltage potential, preferably a supply voltage 11c, wherein a second terminal, exemplarily a source terminal, of said first field-effect transistor 11a is connected to a first terminal, exemplarily a drain terminal, of the second field-effect transistor 11b. Additionally, a second terminal, exemplarily a source terminal, of said second field-effect transistor 11b is connected to a third voltage potential, preferably ground, more preferably ground 11d of the primary side 15a.

With respect to the above-mentioned series connection of primary side 15a or the resonant tank 12, respectively, it is noted that the first terminal, exemplarily the drain terminal, of the second field-effect transistor 11b is connected to a first terminal of the leakage inductance 12b, wherein a second terminal of said leakage inductance 12b is connected to a first terminal of the transformer main inductance 12d. Additionally, a second terminal of said transformer main inductance 12d is connected to a first terminal of the capacitance 12c, wherein a second terminal of said capacitance 12c is connected to the second terminal, exemplarily the source terminal, of the second field-effect transistor 11b.

Furthermore, the resonant hybrid flyback converter 10 comprises a processing unit 14, wherein the processing unit 14 is configured to sense a LED current with respect to the LED-based load 13c.

In this context, the resonant hybrid flyback converter 10 exemplarily comprises current sensing means 13b especially being connected in series to the LED-based load or the LED 13c, respectively. It is noted that the processing unit 14 is exemplarily connected to said current sensing means 13b.

In addition to this, the processing unit is configured to control an on-time of the low-side switch, exemplarily the second field-effect transistor 11b, and/or an on-time of the high-side switch, exemplarily the first field-effect transistor 11a, on the basis of the LED current.

In this context, the processing unit 14 is exemplarily connected to a third terminal, exemplarily a gate terminal, of the first field-effect transistor 11a, and/or to a third terminal, exemplarily a gate terminal, of the second field-effect transistor 11b.

It might be particularly advantageous if the processing unit 14 is configured to adjust an operating point with respect to controlling the on-time of the high-side switch, exemplarily the first field-effect transistor 11a, on the basis of controlling the on-time of the low-side switch, exemplarily the second field-effect transistor 11b.

Furthermore, the processing unit 14 may preferably be configured to control the on-time of the low-side switch, exemplarily the second field-effect transistor 11b, such that there is essentially a zero current switching of the low-side switch, exemplarily the second field-effect transistor 11b.

Moreover, the processing unit 14 may preferably be configured to control the on-time of the low-side switch, exemplarily the second field-effect transistor 11b, such that the on-time of the low-side switch, exemplarily the second field-effect transistor 11b, does not exceed a maximum limit being especially settable. It is noted that said maximum limit can be set by a user in advance and/or during operation.

It is further noted that it might be particularly advantageous if the processing unit 14 is configured to control the on-time of the low-side switch, exemplarily the second field-effect transistor 11b, such that the on-time of the low-side switch, exemplarily the second field-effect transistor 11b, does not undercut a minimum limit being especially settable. It is noted that said minimum limit can be set by a user in advance and/or during operation.

Furthermore, the processing unit 14 may be configured to limit a step size with respect to controlling the on-time of the low-side switch, exemplarily the second field-effect transistor 11b.

Moreover, the processing unit 14 may be configured to control the on-time of the low-side switch, exemplarily the second field-effect transistor 11b, and/or the on-time of the high-side switch, exemplarily the first field-effect transistor 11a, such that a respective conducting current on the secondary side 15b is kept near resonance.

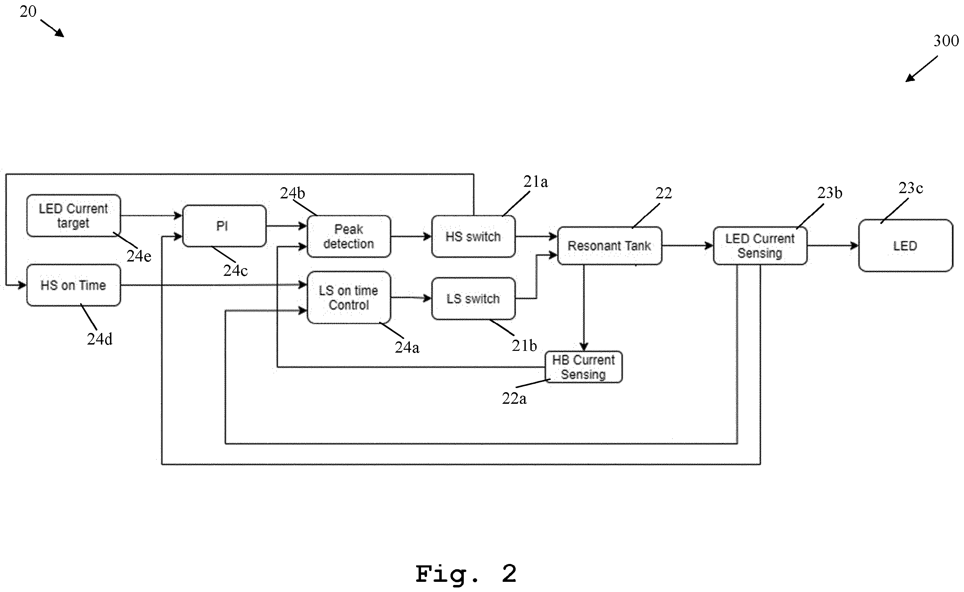

Now, with respect to Fig. 2, an abstract illustration of the first and the second aspect of the invention, such as the resonant hybrid flyback converter 10 or the system 200, respectively, of Fig. 1, is shown especially for explaining corresponding functioning in greater detail. It is noted that all the explanations above analogously apply for Fig. 2 and vice versa.

By analogy with Fig. 1, it is noted that said Fig. 2 additionally illustrates an exemplary embodiment of the inventive system 300 comprising the resonant hybrid flyback converter 20 and the LED-based load, exemplarily the LED 23c, being supplied by the resonant hybrid flyback converter 20.

In accordance with said Fig. 2, the resonant hybrid flyback converter 20 comprises a controlling element, exemplarily a proportional integral controlling element 24c, which can also be implemented or comprised by the processing unit 14 of the resonant hybrid flyback converter 10 of Fig. 1.

In this context, it is noted that controlling the on-time of the high-side switch 21a is exemplarily based on a controlled variable received from the controlling element, preferably the proportional integral controlling element 24c.

As it can further be seen from Fig. 2, the controlling element, preferably the proportional integral controlling element 24c, is exemplarily configured to form the controlled variable on the basis of the LED current provided by the exemplary LED current sensing unit 23b and a target LED current being especially settable as illustrated by the exemplary LED current target block 24e.

With respect to said target LED current, it is noted that the target LED current can be settable by a user especially during operation of the resonant hybrid flyback converter 20. Additionally or alternatively, the target LED current can be predefined and exemplarily be provided by a memory. Accordingly, the target LED current can be settable in advance and/or during operation especially like the above-mentioned maximum limit or minimum limit, respectively. Consequently, said maximum limit or minimum limit, respectively, can be predefined and exemplarily be provided by a memory.

Furthermore, especially in the light of Fig. 1 and Fig. 2, the processing unit 14 may be configured to sense a half-bridge current with respect to the primary side 15a as illustrated by the exemplary half-bridge current sensing unit 22a.

In this context, the processing unit 14 may additionally or alternatively be configured to control the on-time of the high-side switch 21a or the first field-effect transistor 11a, respectively, on the basis of a peak detection 24b with respect to the controlled variable and/or the half-bridge current. It is noted that the processing unit 14 can exemplarily be configured to perform said peak detection with respect to the half-bridge current.

With respect to the half-bridge current sensing unit 22a, it is noted that said half-bridge current sensing unit 22a can be seen as the further current sensing means 12a of Fig. 1 especially in combination with the processing unit 14 according to Fig. 1. Accordingly, said further current sensing means 12a may especially be connected in series to the above-mentioned series connection of the primary side 15a or the resonant tank 12, respectively. It is noted that the processing unit 14 may exemplarily be connected to the further current sensing means 12a.

Moreover, also especially in the light of Fig. 1 and Fig. 2, it might be particularly advantageous if the processing unit 14 is configured to sense the on-time of the high-side switch 21a or the first field-effect transistor 11a, respectively.

In this context, it is noted that the processing unit 14 can additionally or alternatively be configured to control the on-time of the low-side switch 21b or the second field-effect transistor 11b, respectively, on the basis of the on-time of the high-side switch 21a or the first field-effect transistor 11a, respectively.

For the sake of completeness, all connections according to Fig. 2 are described in the following, wherein at least some equivalents with respect to Fig. 1 are explicitly explained.

A terminal, exemplarily an output, of the above-mentioned block 24e illustrating the target LED current is connected to a first terminal, exemplarily a first input, of the controlling element, exemplarily the proportional integral controlling element 24c, wherein a second terminal, exemplarily a second input, of the controlling element, exemplarily the proportional integral controlling element 24c, is connected to a first terminal, exemplarily an output, of the LED current sensing unit 23b.

Furthermore, a third terminal, exemplarily an output, of the controlling element, exemplarily the proportional integral controlling element 24c, is connected to a first terminal, exemplarily a first input, of the peak detection unit 24b, wherein a second terminal, exemplarily an output, of said peak detection unit 24b is connected to a first terminal, exemplarily an input preferably in the form of the gate terminal of the first field-effect transistor 11a of Fig. 1, of the high-side switch 21a, wherein a second terminal, exemplarily an output preferably in the form of the drain terminal of the first field-effect transistor 11a of Fig. 1, of the high-side switch 21 is connected to a first terminal, exemplarily a first input, of the resonant tank 22.

Moreover, a second terminal, exemplarily a first output, of said resonant tank 22 is connected to a second terminal, exemplarily an input, of the LED current sensing unit 23b, wherein a third terminal, exemplarily a second output, of said LED current sensing unit 23b is connected to a terminal, exemplarily an input, of the LED 23c.

With respect to the above-mentioned high-side switch 21a, it is noted that a third terminal, exemplarily a sensing terminal, of said high-side switch 21a is connected to a first terminal, exemplarily an input, of the block 24d illustrating the on-time of the high-side switch, wherein a second terminal, exemplarily an output, of said block 24d is connected to a first terminal, exemplarily a first input, of the low-side on-time control unit 24a.

With respect to the above-mentioned sensing terminal of the high-side switch 21a, it is noted that said sensing terminal can be seen as the gate terminal or the drain terminal of the first field-effect transistor 11a of Fig. 1. As an alternative, said sensing terminal can be seen as an output of a combinatorial circuit or a sequential logic system, said circuit or system comprising the gate terminal and/or the drain terminal of the first field-effect transistor 11a as an input or inputs, respectively.

Again, with respect to the low-side on-time control unit 24a, it is noted that a second terminal, exemplarily an input, of said low-side on-time control unit 24a is connected a first terminal, exemplarily an input, of the low-side switch 21b, wherein a second terminal, exemplarily an output, of said low-side switch 21b is connected to a third terminal, exemplarily a second input, of the resonant tank 22.

Furthermore, a fourth terminal, exemplarily a second output, of said resonant tank 22 is connected to a first terminal, exemplarily an input, of the half-bridge current sensing unit 22a, wherein a second terminal, exemplarily an output, of said half-bridge current sensing unit 22a is connected to a third terminal, exemplarily a second input, of the above-mentioned peak detection unit 24b.

Moreover, a fourth terminal, exemplarily a third output, of the above-mentioned LED current sensing unit 23b is connected to a third terminal, exemplarily a second input, of the above-mentioned low-side on-time control unit 24a.

It is further noted that with respect to the elements equipped with reference signs 24a to 24e, it might be particularly advantageous if at least one, preferably each, of said elements is implemented or comprised by a processing unit such as the processing unit 14 according to Fig. 1.

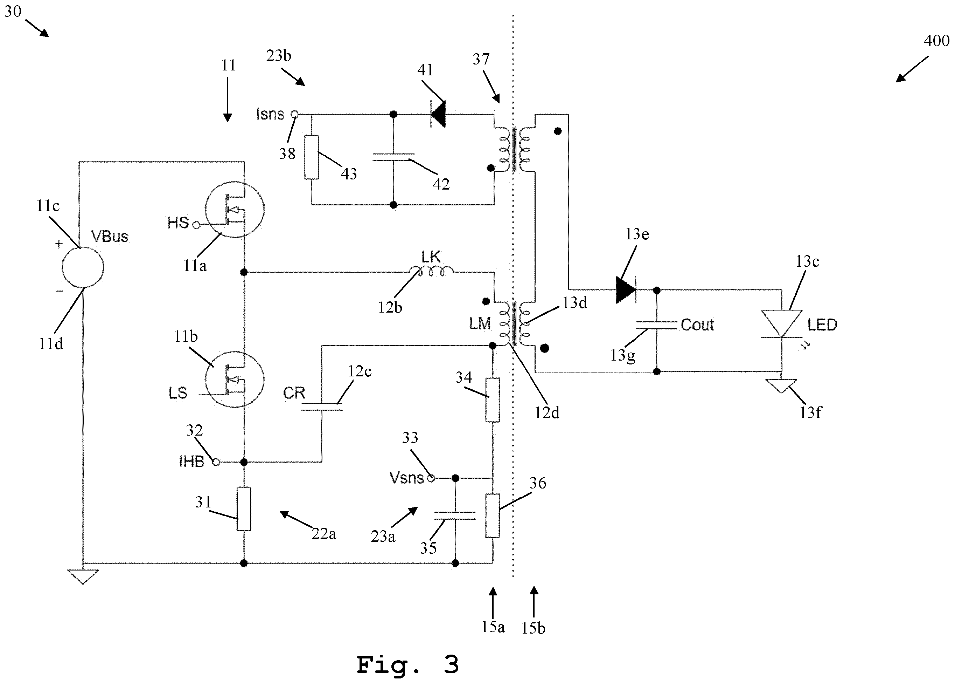

Now, with respect to Fig. 3, an exemplary circuit diagram 30 for further illumination of Fig. 1 or Fig. 2, respectively, is shown. In this context, it is noted that for the sake of compactness, elements having already been explained above are not elucidated again but equipped with the same reference signs.

By analogy with Fig. 1 or Fig. 2, respectively, it is noted that said Fig. 3 additionally illustrates an exemplary embodiment of the inventive system 400 comprising the resonant hybrid flyback converter 30 and the LED-based load, exemplarily the LED 13c, being supplied by the resonant hybrid flyback converter 30.

As it can be seen from said Fig. 3, the half-bridge current sensing 22a is performed at the base of the half bridge 11 exemplarily at terminal 32. In this context, it is noted that Fig. 3 differs from Fig. 1 especially in that the connection of the drain terminal of the second field-effect transistor 11b to the corresponding terminal of the capacitance 12c is not directly connected to the voltage potential 11d but to said terminal 32, wherein the terminal 32, exemplarily being a half-bridge current sensing terminal, is connected to a first terminal of a resistance 31 and a second terminal of said resistance 31 is connected to the voltage potential 11d. It is noted that the terminal 32, exemplarily the half-bridge current sensing terminal, can be connected to the processing unit 14.

Furthermore, in the sense of an optional LED voltage sensing 23a or an optional output voltage sensing, respectively, the output voltage or LED voltage, respectively, can be measured at the terminal 33, exemplarily being a LED voltage sensing terminal, especially knowing the winding ratio of the transformer. The measurement may preferably be made when the discharge of the transformer occurs in the blocking phase of the high-side switch 11a. In this context, it is noted that the LED voltage minus the forward voltage of the diode 13e at the output of the transformer is present on the secondary side 15b as long as this diode 13e is conducting. It is noted that the terminal 33, exemplarily the LED voltage sensing terminal, can be connected to the processing unit 14.

In this context, it might be particularly advantageous if the processing unit 14 is configured to control the on-time of the low-side switch 21b or the second field-effect transistor 11b, respectively, such that for the case that the LED voltage increases, the on-time of the low-side switch 21b or the second field-effect transistor 11b, respectively, decreases, and/or such that for the case that the LED voltage decreases, the on-time of the low-side switch 21b or the second field-effect transistor 11b, respectively, increases.

It is further noted that in the context of the LED voltage sensing 23a or the output voltage sensing, respectively, Fig. 3 differs from Fig. 1 especially in that the connection between the transformer main inductance 12d and the capacitance 12c is additionally connected to a first terminal of a resistance 34, wherein a second terminal of said resistance 34 is connected to the above-mentioned terminal 33, exemplarily the above-mentioned LED voltage sensing terminal. Additionally, said terminal 33 is connected to the above-mentioned voltage potential 11d via a parallel connection of a resistance 36 and a capacitance 35.

In addition to this, in the sense of the above-mentioned LED current sensing 23b, it is noted that said LED current sensing 23b can be performed on the secondary side 15b by means of a current transformer 37 or a current sensing transformer, respectively, especially at the terminal 38, exemplarily being a LED current sensing terminal. Said current transformer 37 or a side thereof, respectively, can exemplarily be inserted into the connection between the transformer secondary inductance 13d and the diode 13e, especially the anode terminal thereof.

Accordingly, the resonant hybrid flyback converter 30 comprises said current transformer 37 for sensing the LED current. It is noted that the processing unit 14 can alternatively comprise such a current transformer.

As it can further be seen from Fig. 3, a first terminal of a further side of the current transformer 37 is connected to a first terminal, exemplarily an anode terminal, of a diode 41, wherein a second terminal, exemplarily a cathode terminal, of said diode 41 is connected to the above-mentioned terminal 38, exemplarily the LED current sensing terminal, which can be connected to the processing unit 14. Additionally, said terminal 38 is exemplarily connected to a second terminal of the further side of the current transformer 37 via a parallel connection of a capacitance 42 and a resistance 43.

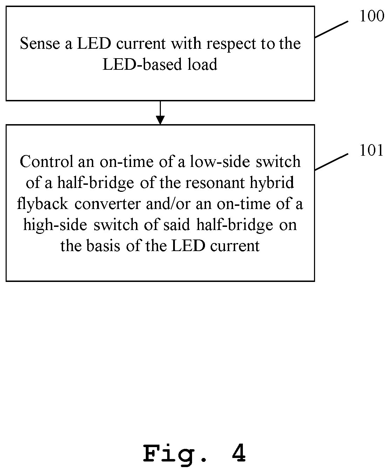

Finally, Fig. 4 illustrates a flow chart of an exemplary embodiment of the inventive method for operating a resonant hybrid flyback converter, especially an inventive resonant hybrid flyback converter such as the one of Fig. 1, for a LED-based load. A first step 100 of said method comprises sensing a LED current with respect to the LED-based load. In addition to this, a second step 101 comprises controlling an on-time of a low-side switch of a half-bridge of the resonant hybrid flyback converter and/or an on-time of a high-side switch of said half-bridge on the basis of the LED current.

While various embodiments of the present invention have been described above, it should be understood that they have been presented by way of example only, and not limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. A resonant hybrid flyback converter (10, 20, 30) for a LED-based load (13c, 23c), the resonant hybrid flyback converter (10, 20, 30) comprising:
a half-bridge (11) comprising a high-side switch (11a, 21a) and a low-side switch (11b, 21b),
a flyback resonant tank (12, 22) comprising a transformer with a primary side (15a) and a secondary side (15b), and
a processing unit (14),
wherein the half-bridge (11) is configured to supply said primary side (15a),
wherein the secondary side (15b) is configured to supply the LED-based load (13c, 23c),
wherein the processing unit (14) is configured to sense a LED current with respect to the LED-based load (13c, 23c), and
wherein the processing unit (14) is configured to control an on-time of the low-side switch (11b, 21b) and/or an on-time of the high-side switch (11a, 21a) on the basis of the LED current.

2. The resonant hybrid flyback converter (10, 20, 30) according to claim 1,
wherein the processing unit (14) is configured to adjust an operating point with respect to controlling the on-time of the high-side switch (11a, 21a) on the basis of controlling the on-time of the low-side switch (11b, 21b), and/or
wherein the resonant hybrid flyback converter (10, 20, 30) is operated as a current-regulated resonant hybrid flyback converter and/or as a constant current source.

3. The resonant hybrid flyback converter (10, 20, 30) according to claim 1 or 2,
wherein the processing unit (14) is configured to control the on-time of the low-side switch (11b, 21b) such that there is essentially a zero current switching of the low-side switch (11b, 21b).

4. The resonant hybrid flyback converter (10, 20, 30) according to any of the claims 1 to 3,
wherein the processing unit (14) is configured to control the on-time of the low-side switch (11b, 21b) such that the on-time of the low-side switch (11b, 21b) does not exceed a maximum limit being especially settable.

5. The resonant hybrid flyback converter (10, 20, 30) according to any of the claims 1 to 4,
wherein the processing unit (14) is configured to control the on-time of the low-side switch (11b, 21b) such that the on-time of the low-side switch (11b, 21b) does not undercut a minimum limit being especially settable.

6. The resonant hybrid flyback converter (10, 20, 30) according to any of the claims 1 to 5,
wherein the processing unit (14) is configured to limit a step size with respect to controlling the on-time of the low-side switch (11b, 21b).

7. The resonant hybrid flyback converter (10, 20, 30) according to any of the claims 1 to 4,
wherein the processing unit (14) is configured to control the on-time of the low-side switch (11b, 21b) and/or the on-time of the high-side switch (11a, 21a) such that a respective conducting current on the secondary side (15b) is kept near resonance.

8. The resonant hybrid flyback converter (10, 20, 30) according to any of the claims 1 to 7,
wherein the resonant hybrid flyback converter (10, 20, 30) or the processing unit (14) comprises a controlling element, preferably a proportional integral controlling element (24c),
wherein controlling the on-time of the high-side switch (11a, 21a) is based on a controlled variable received from the controlling element, preferably the proportional integral controlling element (24c).

9. The resonant hybrid flyback converter (10, 20, 30) according to claim 8,
wherein the controlling element, preferably the proportional integral controlling element (24c), is configured to form the controlled variable on the basis of the LED current and a target LED current (24e) being especially settable.

10. The resonant hybrid flyback converter (10, 20, 30) according to claim 8 or 9,
wherein the processing unit (14) is configured to sense a half-bridge current with respect to the primary side (15a), and/or
wherein the processing unit (14) is configured to control the on-time of the high-side switch (11a, 21a) on the basis of a peak detection (24b) with respect to the controlled variable and/or the half-bridge current.

11. The resonant hybrid flyback converter (10, 20, 30) according to any of the claims 1 to 10,
wherein the processing unit (14) is configured to sense the on-time of the high-side switch (11a, 21a), and/or wherein the processing unit (14) is configured to control the on-time of the low-side switch (11b, 21b) on the basis of the on-time of the high-side switch (11a, 21a).

12. The resonant hybrid flyback converter (10, 20, 30) according to any of the claims 1 to 11,
wherein the resonant hybrid flyback converter (10, 20, 30) or the processing unit (14) comprises a current transformer (37) for sensing the LED current.

13. A system (200, 300, 400) comprising:
a resonant hybrid flyback converter (10, 20, 30) according to any of the claims 1 to 12, and
a LED-based load (13c, 23c) being supplied by said resonant hybrid flyback converter (10, 20, 30).

14. A method for operating a resonant hybrid flyback converter (10, 20, 30) for a LED-based load (13c, 23c), the method comprising the steps of:
sensing (100) a LED current with respect to the LED-based load (13c, 23c), and
controlling (101) an on-time of a low-side switch (11b, 21b) of a half-bridge (11) of the resonant hybrid flyback converter (10, 20, 30) and/or an on-time of a high-side switch (11a, 21a) of said half-bridge (11) on the basis of the LED current.

15. The method according to claim 14,
wherein the method further comprises the step of adjusting an operating point with respect to controlling the on-time of the high-side switch (11a, 21a) on the basis of controlling the on-time of the low-side switch (11b, 21b), and/or operating the resonant hybrid flyback converter (10, 20, 30) as a current-regulated resonant hybrid flyback converter and/or as a constant current source.
